# EUROPÄISCHE PATENTSCHRIFT

(11) **EP 1 306 650 B1**
(45) Veröffentlichungstag und Bekanntmachung des Hinweises auf die Patenterteilung: **06.04.2005**
(21) Anmeldenummer: 02013876.4
(22) Anmeldetag: 01.07.2002
(51) Int. Cl.: G01D 5/48, G01D 11/24, G01D 11/30

(54) **Wegaufnehmervorrichtung**
Displacement sensor
Capteur de déplacement

(30) Priorität: 23.10.2001 DE 10153488
(43) Veröffentlichungstag der Anmeldung: 02.05.2003
(73) Patentinhaber: BALLUFF GmbH, 73765 Neuhausen (DE)
(72) Erfinder: Kurz, Martin, 73061 Ebersbach/Fils (DE); Eckel, Gerd, 73240 Wendlingen (DE); Holder, Roland, 73265 Dettingen/Teck (DE); Eberle, Hansjürgen, 72654 Neckartenzlingen (DE); Springer, Roland, 73765 Neuhausen (DE); Hoffmann, Michael, 73765 Neuhausen (DE); Roth, Walter, 72649 Wolfschlugen (DE)
(74) Vertreter: HOEGER, STELLRECHT & PARTNER Patentanwälte

(56) Entgegenhaltungen:
- DE-A- 3 115 587
- FR-A- 2 749 384
- US-A- 3 898 555
- US-A- 4 952 873
- US-A- 5 136 884
- US-A- 5 313 160
- US-A- 5 514 961

## Beschreibung

Die Erfindung betrifft eine Wegaufnehmervorrichtung zur Erfassung des Weges eines Positionsgebers, umfassend ein sich in einer Längsrichtung erstreckendes Gehäuse und einen in dem Gehäuse angeordneten, sich parallel zu der Längsrichtung erstreckenden Meßfühler, an welchen der Positionsgeber berührungslos koppelt.

Derartige Wegaufnehmervorrichtungen sind beispielsweise aus der DE 43 06 951 A1, der US 5 903 426 oder der US 5 923 164 bekannt.

Mittels ihrer läßt sich der Weg eines beweglichen Maschinenelements erfassen, an welches der Positionsgeber gekoppelt ist. Insbesondere werden dabei transsonare Wegaufnehmervorrichtungen eingesetzt, bei denen der Positionsgeber ein Permanentmagnet oder Elektromagnet ist und der Weg über die Laufzeit von propagierenden mechanischen Wellen auf einem von dem Meßfühler umfaßten Wellenleiter ermittelt wird.

Derartige Wegaufnehmervorrichtungen weisen eine Vielzahl von Anwendungen auf.

Aus der FR 2 749 384 A1 ist ein magnetischer Näherungssensor bekannt.

Aus dem Prospekt "Wegaufnehmer, Drehgeber" von GEFRAN spa, Via Sebina, 74, 25050 Provaglio D'Iseo (BS), Italien, code 80411-01/00 sind potentiornetrische Wegaufnehmer und Drehgeber bekannt.

Davon ausgehend liegt der Erfindung die Aufgabe zugrunde, eine Wegaufnehmervorrichtung gemäß Oberbegriff von Anspruch 1 zu schaffen, welche für einen Anwender variabel einsetzbar ist.

Die eingangs genannte Aufgabe wird erfindungsgemäß dadurch gelöst, daß eine Außenfläche des Gehäuses so ausgebildet ist, daß es zur Fixierung an einer Anwendung von einer Fixierungsaufnahme mindestens teilweise umfaßbar ist und das Gehäuse in der Fixierungsaufnahme relativ zu dem Positionsgeber drehbar ist.

Ein Anwender kann dadurch die Wegaufnehmervorrichtung in die Fixierungsaufnahme einsetzen und sie dann so beispielsweise zu dem Positionsgeber auf dessen Bahnführung hin drehen, daß ein optimales Erfassungsergebnis erreicht ist. Dadurch ergibt sich eine hohe Variabilität für den Einsatz der erfindungsgemäßen Wegaufnehmervorrichtung, da durch die Positionierung der Fixierungsaufnahme relativ zu der Anwendung die endgültige Position des Gehäuses nicht festgelegt sein muß.

Insbesondere ist es vorgesehen, daß die Außenfläche des Gehäuses bezogen auf die Längsrichtung des Gehäuses einen hohen Symmetriegrad aufweist und insbesondere im wesentlichen rotationssymmetrisch ist. Dies läßt sich beispielsweise dadurch erreichen, daß mindestens eine äußere Oberfläche des Gehäuses zylindrisch ausgebildet ist mit einem kreisrunden Profilquerschnitt oder einem polygonalen Querschnitt mit einer Vielzahl von Ecken, beispielsweise zehn Ecken oder mehr.

Ganz besonders vorteilhaft ist es, wenn die Gehäuseoberfläche eine sich in einer Längsrichtung erstreckende Markierung aufweist, welche eine Meßseite anzeigt. Dadurch wird einem Anwender gezeigt, wo die effektive Meßseite der Wegaufnehmervorrichtung liegt, so daß er das Gehäuse und den Positionsgeber optimal aufeinander ausgerichtet positionieren kann. Es kann vorgesehen sein, daß die Markierung durch eine Rille gebildet ist. Insbesondere kann es auch vorgesehen sein, daß die Markierung durch eine Abflachung gebildet ist, wobei die Rille selber auch eine entsprechende Abflachung darstellen kann, um ein Wegrollen des Gehäuses zu verhindern.

Insbesondere weist dabei der Meßfühler einen minimalen Abstand zu der Markierung auf, so daß der Positionsgeber optimal den Meßfühler beaufschlagt, um entsprechende Wegmeßsignale mit hohem Signal-Rausch-Verhältnis zu erzeugen.

Es kann weiter vorgesehen sein, daß an dem Gehäuse eine oder mehrere Quermarkierungen angebracht sind, welche den Meßbereich anzeigen. Dadurch wird einem Anwender der effektive Meßbereich direkt angegeben, in dem sich Wege des Positionsgebers erfassen lassen. Dadurch wiederum wird für den Anwender die Positionierung zwischen Wegaufnehmervorrichtung und Positionsgeber erleichtert.

Es kann insbesondere vorgesehen sein, daß das Gehäuse zylindrisch ausgebildet ist. Ein solches Gehäuse läßt sich auf einfache und kostengünstige Weise beispielsweise mittels Strangpressung herstellen. Es weist einen hohen Symmetriegrad auf, das heißt, es läßt sich in einer entsprechenden Fixierungsaufnahme leicht verdrehen.

Besonders günstig ist es, wenn das Gehäuse rohrförmig ausgebildet ist. Dadurch läßt es sich dann auch beispielsweise erreichen, daß ein Innenraum des Gehäuses im wesentlichen rotationssymmetrisch zu einer Längsrichtung des Gehäuses ist. Dadurch wiederum läßt sich ein entsprechendes Deckelelement auf einfache Weise in das Gehäuse einsetzen und es läßt sich ein dichter Verschluß herstellen, ohne daß beispielsweise der Deckel mit dem Gehäuse verschraubt werden muß.

Günstigerweise weist das Gehäuse auf seiner Außenfläche eine Abflachung auf, mittels der das Gehäuse auf einer Unterlage aufsetzbar ist. Dadurch wird die Handhabbarkeit der Wegaufnehmervorrichtung während der Herstellung und auch während der Fixierung einer Anwendung erhöht, da ein Wegrollen des Gehäuses vermieden ist. Die Formulierung "im wesentlichen" bezüglich der rotationssymmetrischen Ausbildung bezieht sich darauf, daß im Bereich der Abflachung die Rotationssymmetrie nicht besteht.

Es kann vorgesehen sein, daß der Positionsgeber relativ zu dem Gehäuse frei fliegend ist. Dadurch erhält ein Anwender umfangreiche Variationsmöglichkeiten bezüglich der relativen Positionierung zwischen Positionsgeber und Wegaufnehmervorrichtung, ohne daß er an eine mechanische Kopplung des Positionsgebers an das Gehäuse der Wegaufnehmervorrichtung gebunden ist.

Es kann aber auch alternativ vorgesehen sein, daß der Positionsgeber auf dem Gehäuse geführt ist. Bei einer rotationssymmetrischen Ausgestaltung mindestens einer Außenfläche des Gehäuses läßt sich dann der Positionsgeber bügelförmig ausbilden und auf dem Gehäuse führen.

Insbesondere ist eine Fixierungsaufnahme als Halteklammer ausgebildet. Bei einer ersten Ausführungsform ist eine Halteklammer so bügelförmig ausgebildet, daß das Gehäuse zwischen einem Haltebügel der Halteklammer und der Anwendung fixierbar ist, das heißt, das Gehäuse läßt sich über die Halteklammer mit einer entsprechenden Oberfläche der Anwendung verspannen.

Bei einer zweiten Ausführungsform ist eine Halteklammer schellenförmig ausgebildet, wobei das Gehäuse in der Halteschelle fixierbar ist. Das Gehäuse wird damit in die Halteschelle eingelegt und in dieser Halteschelle gehalten.

Es kann dabei vorgesehen sein, daß über eine oder mehrere Fixierungsschrauben zwischen dem Gehäuse und der Halteschelle die Wegaufnehmervorrichtung an der Halteklammer fixierbar ist, das heißt insbesondere die Aufnahmestellung des Gehäuses in der Halteklammer gesichert wird.

Bei einer dritten Ausführungsform umfaßt eine Halteklammer ein erstes Halteelement mit einer ersten Halteausnehmung und ein zweites Halteelement mit einer zweiten Halteausnehmung, wobei das Gehäuse der Wegaufnehmervorrichtung zwischen den beiden Halteelementen in den beiden Halteausnehmungen gehalten ist.

Günstigerweise sind die beiden Halteelemente über eine oder mehrere Fixierungsschrauben miteinander fixierbar, um so das Gehäuse in den Halteausnehmungen zu verklemmen. Die Fixierungsschrauben können dabei gleichzeitig dazu dienen, die Halteklammer an einer Maschine zu fixieren.

Alternativ kann es vorgesehen sein, daß das Gehäuse der Wegaufnehmervorrichtung in einer Ausnehmung an einer Anwendung fixierbar ist. Wenn das Gehäuse im wesentlichen rotationssymmetrisch ausgebildet ist, läßt sich eine solche Ausnehmung auf einfache Weise herstellen, beispielsweise über Ausbohrung.

Weiterhin ist es günstig, wenn das Gehäuse aus einem Material hoher elektrischer und/oder thermischer Leitfähigkeit wie beispielsweise Messing, Zink oder Aluminium hergestellt ist, um so eine hohe EMV-Festigkeit zu erhalten.

Grundsätzlich kann es vorgesehen sein, daß das Gehäuse an einem Ende verschlossen ist, das heißt, daß ein Deckel einstückig mit dem Gehäuse gebildet ist. Vorteilhaft ist es, wenn das Gehäuse an beiden Enden offen ist, so daß es mit Deckeln verschließbar ist. Ein solches Gehäuse läßt sich auf einfache Weise herstellen, da ein Deckel nicht integral mit diesem hergestellt werden muß.

Insbesondere ist dabei ein Deckel zum Verschluß des Gehäuses an diesem schraubenfrei fixierbar, so daß dadurch die Herstellung kostengünstig möglich ist.

Vorteilhafterweise weist ein Deckel zum Verschluß des Gehäuses einen rändelartigen Eintauchbereich in das Gehäuse auf. Über diesen rändelartigen Bereich läßt sich eine gute Fixierung des Deckels an dem Gehäuse erreichen, wobei sich mit geringem Aufwand eine hohe Schutzart wie IP 67 erreichen läßt.

Die nachfolgende Beschreibung bevorzugter Ausführungsformen dient im Zusammenhang mit der Zeichnung der näheren Erläuterung der Erfindung. Es zeigen:
- Figur 1: eine perspektivische Ansicht eines Ausführungsbeispiels einer erfindungsgemäßen Wegaufnehmervorrichtung in Explosionsdarstellung;
- Figur 2: eine perspektivische Ansicht einer Deckel-Anschlußelement-Einheit gemäß Figur 1;
- Figur 3: eine seitliche Teilschnittansicht der Wegaufnehmervorrichtung gemäß Figur 1, bei der die Deckel-Anschlußelement-Einheit an dem Gehäuse fixiert ist;
- Figur 4: eine schematische Ansicht eines magnetostriktiven Meßfühlers;
- Figur 5: ein erstes Ausführungsbeispiel einer Halteklammer;
- Figur 6: ein zweites Ausführungsbeispiel einer Halteklammer;
- Figur 7: ein drittes Ausführungsbeispiel einer Halteklammer;
- Figur 8: ein weiteres Ausführungsbeispiel einer Fixierungsmöglichkeit einer erfindungsgemäßen Wegaufnehmervorrichtung an einer Anwendung;
- Figur 9: eine schematische Darstellung der Positionierungsmöglichkeiten einer erfindungsgemäßen Wegaufnehmervorrichtung an einer Anwendung und
- Figur 10: eine perspektivische Teilansicht einer Variante einer Ausführungsform ohne Gehäuse, bei dem ein Stopfen an einer Halteplatte angeordnet ist.

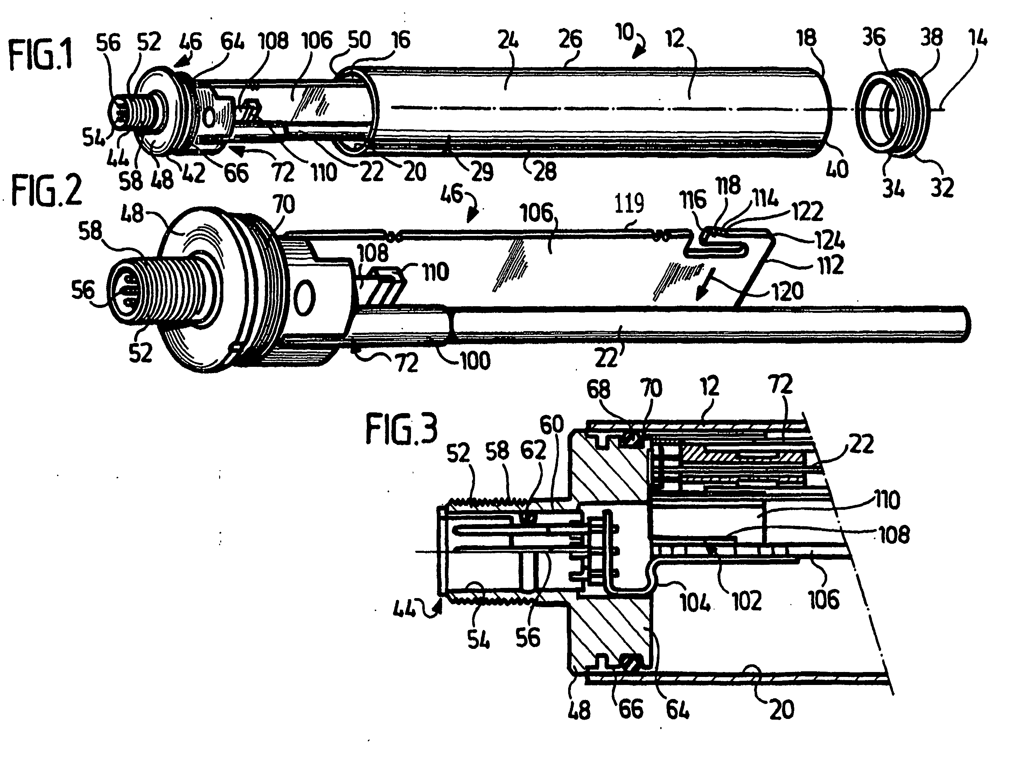

Ein Ausführungsbeispiel einer erfindungsgemäßen Wegaufnehmervorrichtung, welche in Figur 1 als Ganzes mit 10 bezeichnet ist, umfaßt ein Gehäuse 12, welches sich in einer Längsrichtung 14 erstreckt. Das Gehäuse 12 ist insbesondere zylindrisch rohrförmig ausgebildet mit einem ersten offenen Ende 16 und einem gegenüberliegenden zweiten offenen Ende 18. In dem Gehäuse 12 ist zwischen den beiden Enden 16 und 18 ein Gehäuseinnenraum 20 gebildet, welcher unter anderem einen Meßfühler 22 aufnimmt.

Das Gehäuse 12 ist im wesentlichen rotationssymmetrisch um eine Längsachse parallel zu der Längsrichtung 14 bzw. mit dieser zusammenfallend ausgebildet. Eine Oberfläche 24 des Gehäuses 12 ist dabei außerhalb seiner Stirnkanten im wesentlichen kantenfrei ausgebildet.

Bevorzugterweise weist die Oberfläche 24 in der Längsrichtung 14 eine leichte Abflachung 26 auf, die es ermöglicht, das Gehäuse 12 insbesondere während des Produktionsprozesses abzulegen bzw. zu positionieren, ohne daß dieses wegrollt.

Ferner ist die Oberfläche 24 des Gehäuses 12 mit einer Markierung 28 beispielsweise in der Form einer Rille versehen, wobei der Meßfühler 22 so in dem Gehäuse 12 angeordnet ist, daß dessen Abstand zu der Markierung 28 minimiert ist. Die Markierung 28 zeigt dann die aktive Seite bzw. aktive Fläche der Wegaufnehmervorrichtung 10 an, d. h. die Meßseite, und erleichtert damit einem Anwender die Positionierung der erfindungsgemäßen Wegaufnehmervorrichtung 10 an einer Anwendung, beispielsweise einer Werkzeugmaschine oder dergleichen. Es kann auch eine Quermarkierung 29 vorgesehen sein, um am Gehäuse den Meßbereich und insbesondere dessen Anfang anzuzeigen. Eine weitere Markierung kann das Ende des Meßbereichs am Gehäuse 12 anzeigen.

Es kann dabei vorgesehen sein, daß die Abflachung 26 über die Markierung 28 gebildet ist.

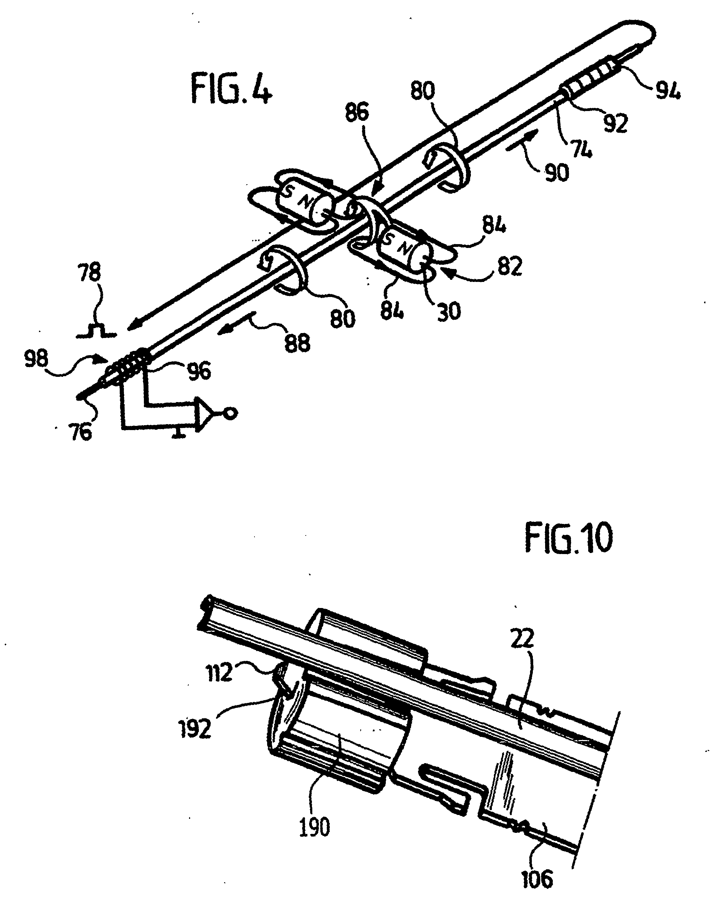

Das Gehäuse 12 ist vorzugsweise aus einem metallischen Material hoher elektrischer und/oder thermischer Leitfähigkeit hergestellt, so daß eine hohe EMV-Festigkeit vorliegt und damit präzise Meßergebnisse erhalten werden können. Das Material für das Gehäuse 12 ist dabei ein nichtmagnetisches Metall, um als Positionsgeber einen Magneten 30 (vgl. Figur 4 und Figur 10) einsetzen zu können. Es kann dabei ein Permanentmagnet oder ein Elektromagnet zum Einsatz kommen. Beispielsweise wird als Material für das Gehäuse 12 Aluminium verwendet.

Der Positionsgeber ist dabei an einem bewegten Maschinenteil fixiert und bewegt sich auf einer parallel zur Wegaufnehmervorrichtung 10 (d. h. parallel zur Längsrichtung 14) verlaufenden Bahn, das heißt freifliegend zu dem Gehäuse 12. Er kann aber auch auf dem Gehäuse geführt sein. Dazu ist der Positionsgeber beispielsweise bügelförmig ausgebildet.

An seinem offenen Ende 18 ist das Gehäuse 12 über einen Deckel 32 verschlossen, welcher einen Eintauchbereich 34 aufweist, mit welchem dieser Deckel 32 in den Innenraum des Gehäuses 12 eintaucht und über den der Deckel 32 an dem Gehäuse 12 fixiert ist. Insbesondere ist dieser Eintauchbereich rändelförmig ausgebildet, so daß der Deckel 32 schraubenfrei an dem Gehäuse 12 fixierbar ist. Vorteilhafterweise ist der Innenraum des Gehäuses 12 mindestens in dem Bereich, in dem der Deckel 12 fixiert wird, im wesentlichen rotationssymmetrisch ausgestaltet und der Deckel 32 mit seinem Eintauchbereich 34 entsprechend ausgestaltet, um so Deckel 32 und Gehäuse 12 auf einfache und dichte Weise miteinander verbinden zu können.

Es ist dabei vorgesehen, daß zwischen dem Eintauchbereich 34 und entsprechenden Innenwänden des Gehäuses 12 ein oder mehrere O-Ringe 36 als Dichtungen angeordnet sind, um den Innenraum 20 von dem Außenraum an dem Ende 18 abzudichten. Insbesondere sind dabei der oder die O-Ringe 36 in den Eintauchbereich 34 des Deckels 32 integriert.

Der Deckel 32 weist anschließend an den Eintauchbereich 34 und insbesondere einstückig mit ihm gebildet eine Deckelscheibe 38 auf mit einem Durchmesser, der im wesentlichen dem Durchmesser des Gehäuses 12 quer zur Längsrichtung 14 entspricht, so daß die Deckscheibe 38 nicht über die Oberfläche 24 des Gehäuses 12 hinausragt und zum anderen eine Stirnseite 40 des Gehäuses 12 an dem Ende 18 mindestens teilweise abdeckt.

Der Deckel 32 ist dabei wiederum bevorzugterweise aus einem Metall hoher elektrischer und/oder thermischer Leitfähigkeit wie Messing hergestellt, um eine hohe EMV-Festigkeit zu bewirken.

Zum Verschluß des Gehäuses 12 an dem Ende 16 ist ein Deckel 42 vorgesehen, welcher zusammen mit einem elektrischen Anschlußelement 44 eine Deckel-Anschlußelement-Einheit 46 bildet, die als Ganzes handhabbar ist und die an dem Gehäuse 12 fixierbar ist.

Zur Bildung der Deckel-Anschlußelement-Einheit 46 weist der Deckel 42 eine Deckelscheibe 48 auf, mittels welcher eine Stirnseite 50 des Gehäuses 12 an dem Ende 16 mindestens teilweise abdeckbar ist. Einstückig an der Deckelscheibe 48 ist sich in der Längsrichtung 14 erstreckend, und zwar von dem Ende 18 abgewandt, ein Stutzen 52 gebildet, welcher einen zylindrischen Innenraum 54 zur Aufnahme eines Steckereinsatzes 56 aufweist (Figuren 1 bis 3). Der Stutzen 52 ist dabei an seiner äußeren Oberfläche mit einem Außengewinde 58 versehen, so daß ein Gegenstecker zu dem Steckereinsatz 56 auf den Stutzen 52 aufschraubbar ist. Der Steckereinsatz 56 ist in dem Stutzen 52 gehalten und beispielsweise in diesem verklebt. In dieses ist insbesondere ein EMV-Filter integriert, um elektromagnetische Verzerrungen, die über das Anschlußelement 44 einstreuen könnten, auszufiltern.

Zwischen dem Steckereinsatz 56 und den Innenraum 54 bildenden Innenwänden 60 des Stutzens 52 ist dabei als Dichtung ein O-Ring 62 angeordnet, um das Gehäuse 12 von dem Außenraum an dem Stutzen 52 abzudichten.

An der Deckelscheibe 48 sitzt einstückig mit dieser verbunden in Richtung des Endes 18 weisend ein Eintauchelement 64, über welches der Deckel 42 der Deckel-Anschlußelement-Einheit 46 in den Innenraum 20 des Gehäuses 12 eintaucht. Dadurch ist an dem Deckel 42 ein Eintauchbereich 66 gebildet, welcher insbesondere rändelförmig ausgebildet ist.

Die Deckel-Anschlußelement-Einheit 46 wird dabei über das Eintauchelement 64 in das Gehäuse 12 gesteckt und über die rändelförmige Ausbildung des Eintauchbereiches 66 an dem Gehäuse 12 gehalten, wobei diese Fixierung schraubenfrei erfolgt, so daß die Zusammensetzung der erfindungsgemäßen Wegaufnehmervorrichtung 10 und der Verschluß des Gehäuses 12 über einen Aufsteckvorgang erfolgt.

Zur Herstellung der Dichtigkeit gegenüber dem Außenraum ist es vorgesehen, daß zwischen dem Eintauchbereich 66 und entsprechenden Innenwänden des Gehäuses 12 ein O-Ring 68 (Figur 3) angeordnet ist.

Zur Aufnahme des O-Rings 68 ist in dem Eintauchbereich 66 eine entsprechende Nut 70 angeordnet.

An dem Eintauchelement 64 der Deckel-Anschlußelement-Einheit 46 sitzt in Richtung des Endes 18 weisend ein Halter 72 für den Meßfühler 22. Dieser Meßfühler ist, wie in Figur 4 gezeigt, als Wellenleiter 74 ausgebildet und beispielsweise rohrförmig ausgebildet oder liegt in Drahtform vor. Beispielsweise ist er aus einer Nickel-Eisen-Legierung hergestellt. In ihn ist ein Kupferleiter 76 eingefädelt.

Ein von einer Meßschnittstelle stammender Erregerstromimpuls löst als Meßsignal eine Messung aus. Der Erregerstromimpuls 78 wird dabei mittels eines Startsignals ausgelöst. Der Erregerstromimpuls 78 erzeugt ein zirkulares Magnetfeld 80, welches aufgrund weichmagnetischer Eigenschaften des Wellenleiters 74 in diesem gebündelt wird. An einer Meßstelle 82 des Wellenleiters 74 ist der Positionsgeber 30, beispielsweise ein Permanentmagnet, angeordnet, wobei dessen Magnetfeldlinien 84 rechtwinklig zum zirkularen Magnetfeld 80 verlaufen und ebenfalls im Wellenleiter 74 gebündelt sind.

In einem Bereich 86, in welchem sich die beiden Magnetfelder 80 und 84 überlagern, entsteht im Mikrobereich des Gefüges des Wellenleiters 74 eine elastische Verformung aufgrund von Magnetostriktion. Diese elastische Verformung wiederum bewirkt eine sich längs des Wellenleiters 74 in entgegengesetzte Richtungen 88, 90 ausbreitende elastische Welle. Die Ausbreitungsgeschwindigkeit dieser Welle im Wellenleiter 74 liegt in der Größenordnung von ca. 2800 m/s und ist weitgehend unempfindlich gegenüber Umwelteinflüssen.

An einem Ende 92 des Wellenleiters 74 ist ein Dämpfungsglied 94 vorgesehen, durch das die zu diesem Ende 92 laufende transsonare Welle dort weggedämpft wird, so daß der zurückreflektierte Anteil bei der Signaldetektion gegenüber der direktpropagierenden Welle vernachlässigbar ist.

Am anderen Ende 96 ist ein Signalwandler 98 angeordnet, welcher durch Umkehrung des magnetostriktiven Effektes und magnetische Induktion ein elektrisches Signal erzeugt und dieses an eine Meßschnittstelle liefert.

Die Wellenlaufzeit vom Entstehungsort 82 bis zum Signalwandler 98 ist direkt proportional zum Abstand zwischen dem Positionsgeber 30 und dem Signalwandler 98. Mittels einer Zeitmessung kann daher der Abstand zwischen dem Signalwandler 98 und dem Positionsgeber 30 mit hoher Genauigkeit bestimmt werden. Das primäre Meßsignal für diese Zeitmessung ist der Erregerstromimpuls 78 auf dem Wellenleiter 74 und sein Reaktionsimpuls, welcher zeitversetzt in Abhängigkeit von dem Abstand zwischen dem Signalwandler 98 und dem Positionsgeber 30 von dem Signalwandler 98 an die Meßschnittstelle geliefert wird.

Der Halter 72 ist nun so ausgebildet, daß er in einer zylindrischen Aufnahme 100 den Meßfühler 22 einschließlich Wellenleiter und Signalwandler 98 aufnimmt. Dadurch ist der Meßfühler 22 über den Halter 72 durch die Deckel-Anschlußelement-Einheit 46 in dem Innenraum 20 des Gehäuses 12 gehalten, d. h. derjenige Teil des Meßfühlers 22 außerhalb der Aufnahme 100 erstreckt sich in der Längsrichtung 14 in dem Gehäuse 12, d. h. erstreckt sich freitragend in diesem.

Die Position des Signalwandlers 98 in der Aufnahme 100 bestimmt den Meßbereich.

Eine interne Schaltungsanordnung, welche als Ganzes in Figur 3 mit 102 bezeichnet ist und welche unter anderem zur Ansteuerung des Meßfühlers 22 dient und dabei über das Anschlußelement 44 insbesondere mit einer externen Meßschnittstelle verbindbar ist, ist ebenfalls an der Deckel-Anschlußelement-Einheit 46 angeordnet. Dazu ist das Anschlußelement 44 über einen Filmleiter oder Drahtleiter 104 mit einer Halteplatte 106 verbunden, welche wiederum an dem Deckel 42 sitzt, und zwar an dem Eintauchelement 64 und in Richtung des Endes 18 weist. Die Halteplatte 106 ist mit den elektronischen Bauelementen der Schaltungsanordnung 102 bestückt. Von dieser Halteplatte 106 ausgehend verbindet ein weiterer Filmleiter 108 den Meßfühler 22 elektrisch mit der Halteplatte 106, das heißt mit der Schaltungsanordnung 102, und damit wiederum mit dem Anschlußelement 44. Der Filmleiter 104 ist dabei auf der einen Seite mit der Halteplatte 106 verbunden, während der Flmleiter 108 auf der gegenüberliegenden Seite mit der Halteplatte verbunden ist. Auf diese Weise läßt sich zuerst die Deckel-Anschlußelement-Einheit 46 herstellen und dabei auch über den Filmleiter 104 ein Verbindungsanschluß auf der Halteplatte 106 herstellen, während dann der Meßfühler 22 über die Aufnahme 100 an der Deckel-Anschlußelement-Einheit 46 positionierbar ist und dann über den Filmleiter 108 die elektrische Verbindung über ein entsprechendes Anschlußelement 110 und den Filmleiter 108 ausbildbar ist.

Die Schaltungsanordnung 102 ist so bezüglich der Deckel-Anschlußelement-Einheit 46 angeordnet, daß guter thermischer Kontakt eben zwischen dem Deckel 42 und der Schaltungsanordnung 102 herrscht, so daß thermisches Gleichgewicht schnell erreichbar ist. Der Deckel 42 ist dabei vorzugsweise aus einem Metall hoher elektrischer und/oder thermischer Leitfähigkeit hergestellt.

Die Halteplatte 106 erstreckt sich in Längsrichtung 14 zu dem Ende 18 hin und weist dabei eine Länge auf, welche beispielsweise der halben Länge oder zwei Drittel der Länge des Gehäuses 12 entspricht. Eine Breite der Halteplatte 106 quer zur Längsrichtung 14 entspricht im wesentlichen einem Innendurchmesser des Gehäuses 12. Die Halteplatte 106 ist an einem Durchmesser des Deckels 42 angeordnet, d. h. eine Längsachse der Halteplatte 106 fällt mit einer Symmetrieachse des Deckels 42 zusammen. Auf diese Weise läßt sich die Deckel-Anschlußelement-Einheit 46 in dem Gehäuse 12 über die Halteplatte 106 fixieren, die eine Verrückung der Deckel-Anschlußelement-Einheit 46 in dem Gehäuse 12 verhindert. Die Halteplatte 106 bewirkt also eine zusätzliche Fixierung und insbesondere Verklemmung der Deckel-Anschlußelement-Einheit 46 mit dem Gehäuse 12.

In der Nähe ihres vorderen Endes 112 weist die Halteplatte 106 gegenüberliegende Klemmelemente 114 auf, welche quer zur Längsrichtung 14 elastisch beweglich ausgebildet sind. Ein Klemmelement 114 weist dabei eine Klemmnase 116 auf, deren seitliche Oberfläche 118 im nicht kraftbeaufschlagten Zustand über eine restliche Seitenfläche 119 der Halteplatte 106 hinausragt.

Wird die Halteplatte 106 in den Innenraum 20 des Gehäuses 12 geschoben, dann wird dadurch die Klemmnase 116 während des Hineinschiebens der Deckel-Anschlußelement-Einheit 46 in das Gehäuse 12 in eine Richtung 120 quer zur Längsrichtung gedrückt. Andererseits übt dann das Klemmelement 114 in Gegenrichtung zu der Richtung 120 eine Kraft auf entsprechende Innenwände des Gehäuses 12 aus und bewirkt dadurch eine Fixierung der Halteplatte 106 in dem Gehäuse 12, wenn entsprechend keine Kraft mehr in Längsrichtung 14 ausgeübt wird, d. h. wenn die Deckel-Anschlußelement-Einheit 46 über ihren Eintauchbereich 66 an dem Gehäuse fixiert ist.

Die Oberfläche 118 weist eine schiefe Ebene 122 auf, über die eben beim Einschub der Deckel-Anschlußelement-Einheit 46 mit der Halteplatte 106 eine Klemmnase 116 in der Richtung 120 beweglich ist.

An seinem vorderen Ende 112 ist weiterhin die Halteplatte 106 mit einer Abschrägung 124 versehen, welche das Einführen der Deckel-Anschlußelement-Einheit 46 in das Gehäuse 12 erleichtert.

Erfindungsgemäß wird zur Herstellung der Wegaufnehmervorrichtung 10 die Deckel-Anschlußelement-Einheit 46 hergestellt, der Meßfühler mit dieser mechanisch, und zwar über die Aufnahme 100, und elektrisch über den Filmleiter 108 und das Anschlußelement 110 verbunden. Dadurch ist eine in Figur 2 als Ganzes mit 126 bezeichnete Deckel-Anschlußelement-Meßfühler-Einheit gebildet. Diese läßt sich separat testen.

Nach Abschluß der entsprechenden elektrischen Tests wird diese Einheit 126 in das Gehäuse 12 eingesetzt, und zwar eben als Einheit, d. h. als Ganzes, von dem offenen Ende 16 her in das Gehäuse 12 eingeschoben. Es wird dabei darauf geachtet, daß der Meßfühler 22 auf die Markierung 28 hin ausgerichtet ist, d. h. daß der Abstand minimal ist.

Über den Rändelbereich des Eintauchbereichs 66 wird dann schraubenfrei die Deckel-Anschlußelement-Einheit 46 an dem Gehäuse 12 fixiert, wobei die Halteplatte 106 mit ihren Klemmelementen 114 für eine zusätzliche Klemmfixierung und auch Positionsfixierung (bezüglich Richtungen, welche quer zu der Richtung 120 und der Längsrichtung 14 liegen) sorgt. Auf diese Weise wird zum einen der Meßfühler 22 sich in der Längsrichtung 14 des Gehäuses 12 erstreckend sicher in diesem positioniert und zum anderen wird dabei das Gehäuse 12 durch den Deckel 42 verschlossen. Gleichzeitig ist bereits die Verbindung des Anschlußelements 44 mit dem Meßfühler 22 hergestellt.

Das vordere Ende 18 wird dabei wie oben beschrieben durch den Deckel 32 geschlossen.

Zur Herstellung der Deckel-Anschlußelement-Einheit und der Schaltungsanordnung 102 können die einzelnen Elemente (Deckel 42, Anschlußelement 44, Eintauchelement 64, Halteplatte 106) insbesondere schraubenlos verbunden sein, beispielsweise über Prägung, Vernietung, Verpressung oder Verklebung.

Durch die O-Ring-Dichtung zwischen dem Eintauchelement 64 und dem Gehäuse 12 läßt sich dabei mit geringem Aufwand eine hohe Schutzart (wie IP 67) erreichen.

Bei einer Variante einer Ausführungsform ist es vorgesehen, daß in dem Gehäuse 12 ein Halter für den Meßfühler 22 angeordnet ist (in der Zeichnung nicht gezeigt). Beispielsweise ist dazu das Gehäuse mittels Strangpressung hergestellt und weist ein Strangpreßprofil mit einer entsprechenden Ausbohrung zur Aufnahme des Meßfühlers 22 auf. Entsprechend kann auch beispielsweise eine Nut vorgesehen sein, um die Schaltungsanordnung 102 in dem Innenraum des entsprechenden Gehäuses fixieren zu können.

Die erfindungsgemäße Wegaufnehmervorrichtung 10 läßt sich über das Gehäuse 12 an einer Anwendung, beispielsweise einer Werkzeugmaschine, fixieren. Das sich bewegende Maschinenteil, dessen Wegstrecke ermittelt werden soll und mit welchem der Positionsgeber 30 verbunden ist, ist dabei relativ zu dem Gehäuse 12 frei fliegend, d. h. die Führung für das Maschinenteil und damit dem Positionsgeber 30 ist nicht gekoppelt an die Wegaufnehmervorrichtung 10.

Es kann erfindungsgemäß vorgesehen sein, daß das Gehäuse 12 über beabstandete Halteklammern an der Anwendung fixiert ist.

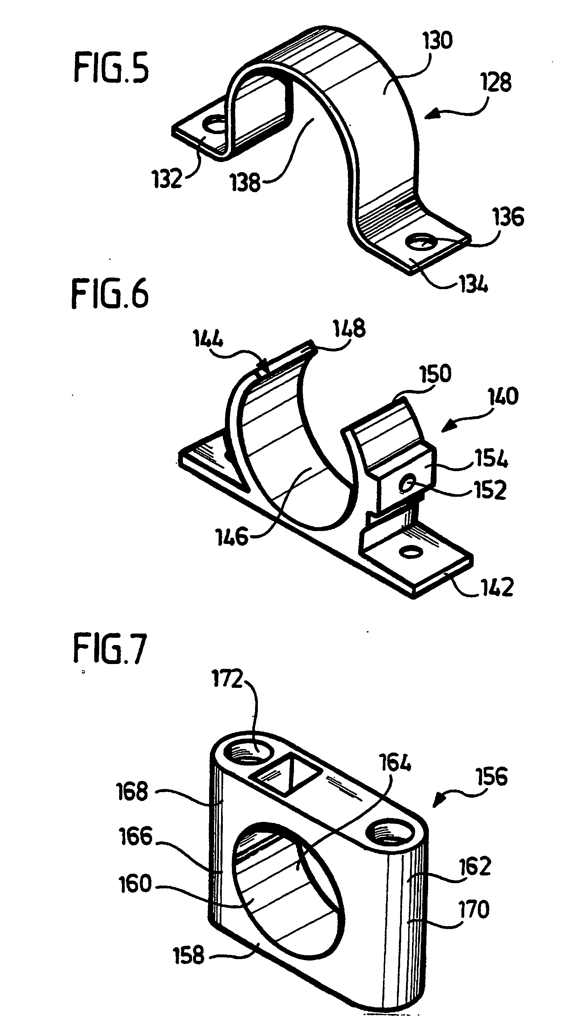

Eine erste Ausführungsform einer Halteklammer, welche in Figur 5 gezeigt und dort als Ganzes mit 128 bezeichnet ist, ist bügelförmig ausgebildet mit einem Haltebügel 130, an welchem jeweils endseitig Haltelaschen 132 und 134 sitzen, in denen entsprechende Ausnehmungen 136 gebildet sind, über die die Halteklammer 128 über Schrauben oder Bolzen an der Anwendung fixierbar ist. Zwischen dem Haltebügel 130 und einer Ebene der Haltelaschen 132, 134 ist eine Fixierungsaufnahme 138 gebildet, in welche das Gehäuse 12 einlegbar ist. Der Haltebügel 130 wirkt dabei von oben (der Anwendung abgewandt) auf das Gehäuse 12 und klemmt dabei die Wegaufnehmervorrichtung 10 gegen die Anwendung, wenn entsprechend die Halteklammer 128 über die Haltelaschen 132 und 134 mit der Anwendung fixiert ist.

Bei einer zweiten Ausführungsform einer Halteklammer, welche in Figur 6 gezeigt und dort als Ganzes mit 140 bezeichnet ist, ist eine Halteplatte 142 vorgesehen, welche auf einer Anwendung positionierbar ist und an dieser beispielsweise über Schraubenverbindungen oder Bolzenverbindungen fixierbar ist. An der Halteplatte 142 sitzt und ist insbesondere einstückig an dieser gebildet eine Halteschelle 144, welche eine Fixierungsaufnahme 146 aufweist, die einen Querschnitt in der Form eines Kreisausschnitts aufweist. Entsprechende Haltewände der Halteschelle 144 sind also kreisbogenförmig ausgestaltet, wobei Enden 148, 150 beabstandet gegenüberliegen.

In diese Fixierungsaufnahme 146 ist das Gehäuse 12 der Wegaufnehmervorrichtung 10 einsetzbar. An der Halteschelle 144 ist eine durchgehende Ausnehmung 152 gebildet, über die eine Fixierungsschraube auf das Gehäuse 12 in der Fixierungsaufnahme 146 wirken kann und diese insbesondere kraftschlüssig in der Halteschelle 144 verklemmen kann. Dazu ist die Ausnehmung 152 mit einem Innengewinde versehen.

Um eine längere Gewindeführung für eine solche Fixierungsschraube zu erreichen, ist an einer Außenseite der Halteschelle 144, welche der Fixierungsaufnahme 146 abgewandt ist, um die Ausnehmung 152 ein blockförmiges Durchführungselement 154 gebildet, welches insbesondere einstückig an der Halteschelle 144 sitzt.

Es können verschiedene Anordnungen des Durchführungselements 154 und der Ausnehmung 152 vorgesehen sein, d. h. eine Längsachse der Ausnehmung 152 kann unterschiedliche Winkelstellungen zu der Halteplatte 142 je nach Typ der Halteklammer 140 aufweisen. (Je nach Anwendung kann es vorteilhafter sein, daß die Ausnehmung 152 einen größeren Winkel zu der Halteplatte 142 aufweist oder einen kleineren Winkel, d. h. näher an der Halteplatte 142 liegt.)

Bei einer dritten Ausführungsform einer Halteklammer, welche in Figur 7 gezeigt und als Ganzes dort mit 156 bezeichnet ist, ist ein erstes Halteelement 158 mit einer halbrunden ersten Halteausnehmung 160 und ein zweites Halteelement 162 mit einer halbrunden zweiten Halteausnehmung 164 vorgesehen, wobei die beiden Halteausnehmungen 160, 164 zusammen eine Fixierungsaufnahme für das Gehäuse 12 der erfindungsgemäßen Wegaufnehmervorrichtung 10 bilden.

Bei dem in Figur 7 gezeigten Ausführungsbeispiel sind dabei die beiden Halteelemente 158 und 162 jochförmig ausgebildet und an einem Jochbein einstückig miteinander verbunden, während an ihren jeweiligen anderen Jochbeinen 166, 168 sie nicht miteinander verbunden sind. Aufgrund einer entsprechenden elastischen Ausbildung der Halteklammer 156, insbesondere über die entsprechende Wahl des Herstellungsmaterials der Halteklammer 156, lassen sich dadurch die erste Halteausnehmung 160 und die zweite Halteausnehmung 164 einseitig schwenken mit einer Schwenkachse, die im Bereich des verbundenen Jochbeins 170 liegt. Es läßt sich dadurch der Abstand zwischen den Jochbeinen 166 und 168 variieren.

Das Gehäuse 12 wird in die Fixierungsausnehmung eingelegt. Eine mit einem Gewinde versehene Ausnehmung 172 durchdringt dabei das Jochbein 168 und das Jochbein 166 zumindest teilweise, so daß eine Fixierungsschraube die beiden Jochbeine 168 und 166 gegeneinander fixieren kann und damit das zweite Halteelement 162 auf das erste Halteelement 158 zubewegen kann, so daß eben das Gehäuse 12 der Wegaufnehmervorrichtung 10 in der Fixierungsaufnahme 160, 164 verklemmbar ist. Die entsprechende Fixierungsschraube kann gleichzeitig zur Fixierung der Halteklammer 156 an der Anwendung dienen.

Die Halteklammern 128 und 140 (Figuren 5 und 6) sind vorzugsweise aus einem metallischen Material gefertigt, während die Halteklammer 156 (Figur 7) vorzugsweise aus einem Kunststoffmaterial gefertigt ist.

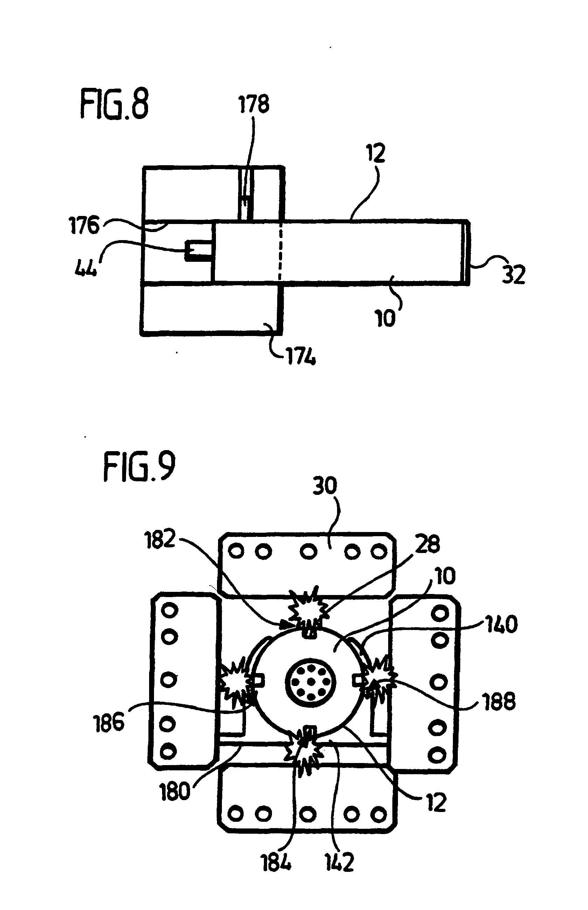

Es kann auch vorgesehen sein, daß die Anwendung eine Halteausnehmung für das Gehäuse 12 der Wegaufnehmervorrichtung 10 aufweist. Beispielsweise ist dazu in einem Maschinenblock 174 (Figur 8) eine zylindrische Ausnehmung 176 gebildet, in die die Wegaufnehmervorrichtung 10 einschiebbar ist. Über eine Fixierungsschraube 178 läßt sich dann das Gehäuse 12 der Wegaufnehmervorrichtung 10 an dem Maschinenblock fixieren. Das Gehäuse 12 läßt sich dabei als Führung für einen Positionsgeber nutzen.

Bei einer Variante einer Ausführungsform, welche in Figur 10 schematisch gezeigt ist, ist an der Halteplatte 106 an oder im Bereich ihres vorderen Endes 112 ein Stopfen 190 angeordnet, welcher insbesondere aus einem porösen Material wie Moosgummi oder Styropor hergestellt ist.

Zur Aufnahme dieses Stopfens 190 ist die Halteplatte 106 an ihrem vorderen Ende 112 mit einem Ansatz 192 versehen, auf den der Stopfen 190 aufschiebbar ist und an dem dieser dann gehalten ist.

Der Stopfen dient zur thermischen Isolierung zu dem Deckel 32 hin. Es hat sich gezeigt, daß bei Verwendung eines entsprechenden Stopfens 190 ein schnellerer Warmlauf der Wegaufnehmervorrichtung 10 erreichbar ist, das heißt, daß die stationäre Betriebsphase nach dem Einschalten schneller erreichbar ist.

Es kann vorgesehen sein, daß der Stopfen 190 auf den Ansatz 192 der Halteplatte 106 aufgesteckt wird und dann die Deckel-Anschlußelement-Einheit 46 mit der Halteplatte 106 und dem Stopfen 190 in das Gehäuse 12 hineingeschoben wird. Dies ist insbesondere vorgesehen, wenn das Gehäuse 12 an seinem vorderen Ende verschlossen ist, das heißt, wenn der entsprechende Deckel einstückig an dem Gehäuse gebildet ist.

Es kann aber auch vorgesehen sein, daß der Stopfen 190 auf die in dem Gehäuse 12 positionierte Halteplatte 106 von einem offenen Ende 18 her in das Gehäuse auf die Halteplatte aufgeschoben wird und anschließend der Deckel 32 an dem Gehäuse 12 fixiert wird.

Durch die rohrförmige zylindrische Ausgestaltung des Gehäuses 12 läßt sich dieses auf einfache und kostengünstige Weise herstellen. Diese Form ist auch für die Anwendung vorteilhaft, da das Gehäuse 12 und damit die Wegaufnehmervorrichtung 10 eine hohe Steifigkeit aufgrund eines optimierten Verhältnisses von Masse und Flächenträgheitsmoment aufweist.

Die Abflachung 26 erlaubt eine verbesserte Handhabbarkeit insbesondere während der Herstellung und auch während des Fixierungsvorgangs der Wegaufnehmervorrichtung 10 an einer Anwendung.

Aufgrund der im wesentlichen rotationssymmetrischen Ausgestaltung des Gehäuses 12 läßt sich, wie in Figur 8 gezeigt, die erfindungsgemäße Wegaufnehmervorrichtung 10 auf einfache Weise an einer Anwendung fixieren, wenn eine entsprechende Ausnehmung 156 vorgesehen ist. Die Wegaufnehmervorrichtung 10 läßt sich dabei vor der Fixierung in der Ausnehmung 176 in die gewünschte Sensorposition drehen, d. h. in die Position drehen, in welcher die aktive Meßseite, dem Anwender durch die Markierung 28 angezeigt, in der gewünschten Position ist.

Weiterhin lassen sich aufgrund der zylindrischen Ausgestaltung des Gehäuses 12 verschiedene Arten von Halteklammern (Figuren 5 bis 7) verwenden, um die Wegaufnehmervorrichtung 10 an einer Anwendung zu fixieren. Dadurch wiederum läßt sich die Fixierung für eine spezielle Anwendung optimieren.

Dadurch, daß der Positionsgeber 30 relativ zu dem Gehäuse 12 frei fliegend ist und die Wegaufnehmervorrichtung 10 in einer Fixierungsaufnahme vor der endgültigen Fixierung aufgrund ihrer zylindrischen Ausgestaltung drehbar ist, hat ein Anwender eine hohe Flexibilität bezüglich der Positionierung der Wegaufnehmervorrichtung 10 an einer Anwendung. Beispielsweise liegt eine erhöhte Variabilität bezüglich der Richtung des Kabelabgangs von dem Anschlußelement 44 vor.

Beispielhaft ist in Figur 9 eine Wegaufnehmervorrichtung gezeigt, welche über Halteklammern 140 an einer Anwendung 180, beispielsweise einer Maschine, fixiert ist. In einer ersten Stellung 182 ist dabei die aktive Seite der Wegaufnehmervorrichtung 10 von der Halteplatte 142 abgewandt und der Positionsgeber 30 wird parallel zur Halteplatte oberhalb der Halteklammer 140 verfahren.

Wird dagegen der Positionsgeber 30 unterhalb der Halteplatte 142 verfahren, dann läßt sich beispielsweise ausgehend von der Position 182 dies auf einfache Weise dadurch erreichen, daß das Gehäuse 12 um 180° gedreht wird. Dies ist in Figur 9 durch die Position mit dem Bezugszeichen 184 angedeutet.

Wird der Positionsgeber 30 in der Längsrichtung 14 seitlich von der Halteklammer 140 verfahren, so läßt sich ausgehend von der Position 182 das Gehäuse 12 um 90° nach links bzw. rechts drehen, um die aktive Seite der Wegaufnehmervorrichtung 10 in einen optimierten Kopplungskontakt mit dem Positionsgeber 30 zu bringen. Dies ist in Figur 9 durch die Positionen mit dem Bezugszeichen 186 und 188 angedeutet.

In den jeweiligen Meßpositionen der Wegaufnehmervorrichtung 10 ist dabei insbesondere der Abstand zwischen der Markierung 28 und dem Positionsgeber 30 bezogen auf anderen Drehpositionen des Gehäuses 12 minimiert, d. h. der Abstand zwischen dem Meßfühler 22 und dem Positionsgeber 30 ist bezogen auf andere Drehstellungen des Meßfühlers 22 minimiert.

## Patentansprüche

1. Wegaufnehmervorrichtung zur Erfassung des Wegs eines Positionsgebers (30), umfassend ein sich in einer Längsrichtung (14) erstreckendes Gehäuse (12) und ein in dem Gehäuse (12) angeordneten, sich parallel zu der Längsrichtung (14) erstreckenden Meßfühler (22), an welchen der Positionsgeber (30) berührungslos koppelt,
**dadurch gekennzeichnet , daß** eine Außenfläche (24) des Gehäuses (12) so ausgebildet ist, daß es zur Fixierung an einer Anwendung von einer Fixierungsaufnahme (138; 146; 160; 164; 176) mindestens teilweise umfaßbar ist und daß das Gehäuse (12) in der Fixierungsaufnahme (138; 146; 160; 164; 176) relativ zu dem Positionsgeber (30) drehbar ist.

2. Wegaufnehmervorrichtung nach Anspruch 1, **dadurch gekennzeichnet, daß** die Außenfläche (24) des Gehäuses (12) bezogen auf die Längsrichtung (14) des Gehäuses (12) einen hohen Symmetriegrad aufweist.

3. Wegaufnehmervorrichtung nach Anspruch 1 oder 2, **dadurch gekennzeichnet, daß** die Außenfläche (24) bezogen auf die Längsrichtung (14) des Gehäuses (12) im wesentlichen rotationssymmetrisch ist.

4. Wegaufnehmervorrichtung nach einem der vorangehenden Ansprüche, **dadurch gekennzeichnet, daß** eine Gehäuseoberfläche (24) eine sich in eine Längsrichtung (14) erstreckende Markierung (28) aufweist, welche eine Meßseite anzeigt.

5. Wegaufnehmervorrichtung nach Anspruch 4, **dadurch gekennzeichnet, daß** der Meßfühler (22) einen minimalen Abstand zu der Markierung (28) aufweist.

6. Wegaufnehmervorrichtung nach Anspruch 4 oder 5, **dadurch gekennzeichnet, daß** ein oder mehrere Quermarkierungen (29) vorgesehen sind, welche am Gehäuse (12) den Meßbereich anzeigen.

7. Wegaufnehmervorrichtung nach einem der vorangehenden Ansprüche, **dadurch gekennzeichnet, daß** das Gehäuse (12) zylindrisch ausgebildet ist.

8. Wegaufnehmervorrichtung nach einem der vorangehenden Ansprüche, **dadurch gekennzeichnet, daß** das Gehäuse (12) rohrförmig ausgebildet ist.

9. Wegaufnehmervorrichtung nach einem der vorangehenden Ansprüche, **dadurch gekennzeichnet, daß** das Gehäuse (12) auf seiner Außenfläche (24) eine Abflachung (26) aufweist, mittels der das Gehäuse (12) auf einer Unterlage aufsetzbar ist.

10. Wegaufnehmervorrichtung nach einem der vorangehenden Ansprüche, **dadurch gekennzeichnet, daß** der Positionsgeber (30) relativ zu dem Gehäuse (12) freifliegend ist.

11. Wegaufnehmervorrichtung nach einem der Ansprüche 1 bis 9, **dadurch gekennzeichnet, daß** der Positionsgeber (30) auf dem Gehäuse (12) geführt ist.

12. Wegaufnehmervorrichtung nach einem der vorangehenden Ansprüche, **dadurch gekennzeichnet, daß** eine Fixierungsaufnahme als Halteklammer (128; 140; 156) ausgebildet ist.

13. Wegaufnehmervorrichtung nach Anspruch 12, **dadurch gekennzeichnet, daß** eine Halteklammer (128) so bügelförmig ausgebildet ist, daß das Gehäuse (12) zwischen einem Haltebügel (130) der Halteklammer (128) und der Anwendung fixierbar ist.

14. Wegaufnehmervorrichtung nach Anspruch 12, **dadurch gekennzeichnet, daß** eine Halteklammer (140) schellenförmig ausgebildet ist, wobei das Gehäuse (12) in der Halteschelle (144) fixierbar ist.

15. Wegaufnehmervorrichtung nach Anspruch 14, **dadurch gekennzeichnet, daß** über eine oder mehrere Fixierungsschrauben zwischen dem Gehäuse (12) und der Halteschelle (144) die Wegaufnehmervorrichtung (10) an der Halteklammer (140) fixierbar ist.

16. Wegaufnehmervorrichtung nach Anspruch 12, **dadurch gekennzeichnet, daß** eine Halteklammer (156) ein erstes Halteelement (158) mit einer ersten Halteausnehmung (160) und ein zweites Halteelement (162) mit einer zweiten Halteausnehmung (164) umfaßt, wobei das Gehäuse (12) der Wegaufnehmervorrichtung zwischen den beiden Halteelementen (158, 162) in den beiden Halteausnehmungen gehalten ist.

17. Wegaufnehmervorrichtung nach Anspruch 16, **dadurch gekennzeichnet, daß** die beiden Halteelemente (158, 162) über eine oder mehrere Fixierschrauben miteinander fixierbar sind.

18. Wegaufnehmervorrichtung nach einem der vorangehenden Ansprüche, **dadurch gekennzeichnet, daß** das Gehäuse (12) der Wegaufnehmervorrichtung (10) in einer Ausnehmung (176) an einer Anwendung fixierbar ist.

19. Wegaufnehmervorrichtung nach einem der vorangehenden Ansprüche, **dadurch gekennzeichnet, daß** das Gehäuse (12) aus einem Material hoher elektrischer und/oder thermischer Leitfähigkeit hergestellt ist.

20. Wegaufnehmervorrichtung nach einem der vorangehenden Ansprüche, **dadurch gekennzeichnet, daß** das Gehäuse (12) an beiden Enden offen ist, so daß es mit Deckeln (32, 42) verschließbar ist.

21. Wegaufnehmervorrichtung nach einem der vorangehenden Ansprüche, **dadurch gekennzeichnet, daß** ein Deckel (32; 42) zum Verschluß des Gehäuses (12) an diesem schraubenfrei fixierbar ist.

22. Wegaufnehmervorrichtung nach Anspruch 21, **dadurch gekennzeichnet, daß** ein Deckel (32; 42) zum Verschluß des Gehäuses (12) einen rändelförmigen Eintauchbereich (34; 66) in das Gehäuse (12) aufweist.

## Claims

1. Position transducer device for detecting the position of a position transmitter (30), comprising a housing (12) extending in a longitudinal direction (14) and a measuring sensor (22) arranged in the housing (12) and extending parallel to the longitudinal direction (14), the position transmitter (30) being coupled to said measuring sensor without contact,
**characterized in that** an outer surface (24) of the housing (12) is designed such that it is adapted to be enclosed at least partially by a fixing receiving means (138; 146; 160; 164; 176) for fixing it to an application and that the housing (12) is rotatable in the fixing receiving means (138; 146; 160, 164; 176) relative to the position transmitter (30).

2. Position transducer device as defined in claim 1, **characterized in that** the outer surface (24) of the housing (12) has a high degree of symmetry with respect to the longitudinal direction (14) of the housing (12).

3. Position transducer device as defined in claim 1 or 2, **characterized in that** the outer surface (24) is essentially rotationally symmetric with respect to the longitudinal direction (14) of the housing (12).

4. Position transducer device as defined in any one of the preceding claims, **characterized in that** a housing surface (24) has a marking (28) extending in a longitudinal direction (14) and indicating a measurement side.

5. Position transducer device as defined in claim 4, **characterized in that** the measuring sensor (22) is at a minimum distance in relation to the marking (28).

6. Position transducer device as defined in claim 4 or 5, **characterized in that** one or more transverse markings (29) are provided, said markings indicating the measurement area on the housing (12).

7. Position transducer device as defined in any one of the preceding claims, **characterized in that** the housing (12) is of a cylindrical design.

8. Position transducer device as defined in any one of the preceding claims, **characterized in that** the housing (12) is of a tubular design.

9. Position transducer device as defined in any one of the preceding claims, **characterized in that** the housing (12) has a flattened area (26) on its outer surface (24), the housing (12) being adapted to be placed on a support by means of said flattened area.

10. Position transducer device as defined in any one of the preceding claims, **characterized in that** the position transmitter (30) is free floating relative to the housing (12).

11. Position transducer device as defined in any one of claims 1 to 9, **characterized in that** the position transmitter (30) is guided on the housing (12).

12. Position transducer device as defined in any one of the preceding claims, **characterized in that** a fixing receiving means is designed as a retaining clamp (128; 140; 156).

13. Position transducer device as defined in claim 12, **characterized in that** one retaining clamp (128) is of such a bracket-like design that the housing (12) is adapted to be fixed between a holding bracket (130) of the retaining clamp (128) and the application.

14. Position transducer device as defined in claim 12, **characterized in that** one retaining clamp (140) is of a clip-like design, wherein the housing (12) is adapted to be fixed in the holding clip (144).

15. Position transducer device as defined in claim 14, **characterized in that** the position transducer device (10) is adapted to be fixed on the retaining clamp (140) via one or more fixing screws between the housing (12) and the holding clip (144).

16. Position transducer device as defined in claim 12, **characterized in that** one retaining clamp (156) comprises a first holding element (158) with a first holding recess (160) and a second holding element (162) with a second holding recess (164), wherein the housing (12) of the position transducer device is held between the two holding elements (158, 162) in the two holding recesses.

17. Position transducer device as defined in claim 16, **characterized in that** the two holding elements (158, 162) are adapted to be fixed to one another via one or more fixing screws.

18. Position transducer device as defined in any one of the preceding claims, **characterized in that** the housing (12) of the position transducer device (10) is adapted to be fixed on an application in a recess (176).

19. Position transducer device as defined in any one of the preceding claims, **characterized in that** the housing (12) is produced from a material with a high electrical and/or thermal conductivity.

20. Position transducer device as defined in any one of the preceding claims, **characterized in that** the housing (12) is open at both ends so that it is closable by covers (32, 42).

21. Position transducer device as defined in any one of the preceding claims, **characterized in that** a cover (32; 42) for closing the housing (12) is adapted to be fixed to it without screws.

22. Position transducer device as defined in claim 21, **characterized in that** a cover (32; 42) for closing the housing (12) has a knurled area (34; 66) for dipping into the housing (12).

## Revendications

1. Capteur de déplacement pour l'enregistrement de la course d'un transmetteur de position (30), comprenant un boîtier (12) s'étendant dans une direction longitudinale (14) et un capteur de mesure (22) disposé dans le boîtier (12) et s'étendant parallèlement à la direction longitudinale (14), sur lequel le transmetteur de position (30) est couplé sans contact, **caractérisé en ce qu'**une face extérieure (24) du boîtier (12) est conçue de telle sorte qu'il peut être entouré au moins partiellement, pour la fixation sur une application, par un logement de fixation (138 ; 146 ; 160 ; 164 ; 176) et **en ce que** le boîtier (12) peut tourner dans le logement de fixation (138 ; 146 ; 160 ; 164 ; 176) par rapport au transmetteur de position (30).

2. Capteur de déplacement selon la revendication 1, **caractérisé en ce que** la face extérieure (24) du boîtier (12) présente un degré de symétrie élevé par rapport à la direction longitudinale (14) du boîtier (12).

3. Capteur de déplacement selon la revendication 1 ou 2, **caractérisé en ce que** la face extérieure (24) est sensiblement symétrique en rotation par rapport à la direction longitudinale (14) du boîtier (12).

4. Capteur de déplacement selon l'une quelconque des revendications précédentes, **caractérisé en ce qu'**une surface de boîtier (24) présente un repère (28) s'étendant dans une direction longitudinale (14), qui indique un côté de mesure.

5. Capteur de mesure selon la revendication 4, **caractérisé en ce que** le capteur de mesure (22) présente une distance minimale au repère (28).

6. Capteur de mesure selon la revendication 4 ou 5, **caractérisé en ce qu'**un ou plusieurs repères transversaux (29) sont prévus, lesquels indiquent la plage de mesure sur le boîtier (12).

7. Capteur de mesure selon l'une quelconque des revendications précédentes, **caractérisé en ce que** le boîtier (12) est conçu de façon cylindrique.

8. Capteur de mesure selon l'une quelconque des revendications précédentes, **caractérisé en ce que** le boîtier (12) est conçu avec une forme tubulaire.

9. Capteur selon l'une quelconque des revendications précédentes, **caractérisé en ce que** le boîtier (12) présente sur sa face extérieure (24) une partie aplatie (26), au moyen de laquelle le boîtier (12) peut être posé sur un support.

10. Capteur de déplacement selon l'une quelconque des revendications précédentes, **caractérisé en ce que** le transmetteur de position (30) est en saillie par rapport au boîtier (12).

11. Capteur de déplacement selon l'une quelconque des revendications 1 à 9, **caractérisé en ce que** le transmetteur de position (30) est guidé sur le boîtier (12).

12. Capteur de déplacement selon l'une quelconque des revendications précédentes, **caractérisé en ce qu'**un logement de fixation est conçu comme bride de retenue (128 ; 140 ; 156).

13. Capteur de déplacement selon la revendication 12, **caractérisé en ce qu'**une bride de retenue (128) est conçue en forme d'étrier de telle sorte que le boîtier (12) peut être fixé entre un étrier de retenue (130) de la bride de retenue (128) et l'application.

14. Capteur de déplacement selon la revendication 12, **caractérisé en ce qu'**une bride de retenue (140) est conçue en forme de collier, le boîtier (12) pouvant être fixé dans le collier de retenue (144).

15. Capteur de déplacement selon la revendication 14, **caractérisé en ce que** le capteur de déplacement (10) peut être fixé sur la bride de retenue (140) au moyen d'une ou plusieurs vis de fixation entre le boîtier (12) et le collier de retenue (144).

16. Capteur de déplacement selon la revendication 12, **caractérisé en ce qu'**une bride de retenue (156) comprend un premier élément de retenue (158) avec un premier évidement de retenue (160) et un second élément de retenue (162) avec un second évidement de retenue (164), le boîtier (12) du capteur de déplacement étant maintenu entre les deux éléments de retenue (158, 162) dans les deux évidements de retenue.

17. Capteur de déplacement selon la revendication 16, **caractérisé en ce que** les deux éléments de retenue (158, 162) peuvent être fixés entre eux au moyen d'une ou de plusieurs vis de fixation.

18. Capteur de déplacement selon l'une quelconque des revendications précédentes, **caractérisé en ce que** le boîtier (12) du capteur de déplacement (10) peut être fixé dans un évidement (176) sur une application.

19. Capteur de déplacement selon l'une quelconque des revendications précédentes, **caractérisé en ce que** le boîtier (12) est fabriqué dans un matériau présentant une conductibilité électrique et/ou thermique élevée.

20. Capteur de déplacement selon l'une quelconque des revendications précédentes, **caractérisé en ce que** le boîtier (12) est ouvert sur les deux extrémités, de sorte qu'il peut être fermé avec des couvercles (32, 42).

21. Capteur de déplacement selon l'une quelconque des revendications précédentes, **caractérisé en ce qu'**un couvercle (32, 42) peut être fixé pour la fermeture du boîtier (12) sans vis sur celui-ci.

22. Capteur de déplacement selon la revendication 21, **caractérisé en ce qu'**un couvercle (32 ; 42) pour la fermeture du boîtier (12) présente une zone d'immersion (34 ; 66) en forme de mollette dans le boîtier (12).
